# FASCICULE DE BREVET EUROPEEN

(11) **EP 4 255 723 B1**
(45) Date de publication et mention de la délivrance du brevet: **23.09.2026**
(21) Numéro de dépôt: 21835345.6
(22) Date de dépôt: 26.11.2021
(51) Int. Cl.: B29C 70/52, B29B 15/14, B29B 15/12

(54) **PROCEDE ET DISPOSITIF DE FABRICATION DE COMPOSITES A BASE DE FIBRES MULTIFILAMENTAIRES**
VERFAHREN UND VORRICHTUNG ZUR HERSTELLUNG VON VERBUNDWERKSTOFFEN AUS MULTIFILAMENTFASERN
METHOD AND DEVICE FOR MANUFACTURING COMPOSITES MADE FROM MULTI-FILAMENT FIBRES

(30) Priorité: 07.12.2020 FR 2012755
(43) Date de publication de la demande: 11.10.2023
(73) Titulaire: COMPAGNIE GENERALE DES ETABLISSEMENTS MICHELIN, 63000 Clermont-Ferrand (FR)
(72) Inventeur: OLSOMMER, David, 63040 CLERMONT-FERRAND Cedex 9 (FR); DELFINO, Antonio, 63040 CLERMONT-FERRAND Cedex 9 (FR)
(74) Mandataire: M.F.P. Michelin
(86) Numéro de dépôt international: PCT/FR2021/052102
(87) Numéro de publication internationale: WO 2022/123139

(56) Documents cités:
- EP-A1- 1 506 085
- EP-B1- 1 506 085
- US-A1- 2015 318 080

## Description

La présente invention se rapporte aux procédés de fabrication en continu de matériaux composites longilignes réalisées par imprégnation d'une composition polymérisable des fibres multifilamentaires et elle concerne plus particulièrement un procédé de fabrication de composites sous forme de monobrins, tels du type en CVR (pour composite verre résine) comportant des fibres de verre multifilamentaires continues, unidirectionnelles, noyées dans une résine polymérisable.

Le document EP 1 174 250 décrit un procédé et une installation d'imprégnation en continu de fibres de grande longueur par de la résine pour la fabrication d'éléments composites longilignes en grande longueur, composites qui comportent des fibres de renforcement noyées dans une matrice en résine durcie. Le procédé décrit comprend une étape d'entraînement d'un faisceau de fibres de renforcement, à partir d'une bobine de stockage des fibres, pour le faire passer dans une enceinte sous vide puis dans une chambre d'imprégnation où les fibres sont imprégnées de résine, suivie d'une étape lors de laquelle les fibres imprégnées passent à travers une filière de calibrage après avoir préalablement stabilisé la forme de l'imprégné par une polymérisation au moins partielle de la résine de l'imprégné. Des filières de calibrage de forme et dimensions prédéterminées sont présentes aussi à l'entrée de l'enceinte sous vide et avant la chambre d'imprégnation. L'installation comprend un rouleau de traction qui assure l'entraînement des fibres depuis la bobine de stockage des fibres et une bobine de réception de l'imprégné.

Fonctionnant à satisfaction, il s'est toutefois avéré qu'on arrivait difficilement à augmenter au-delà de certaines limites le diamètre du composite fabriqué avec cette installation. Le besoin de fabriquer des composites de grands diamètres s'est donc fait ressentir.

Une solution à ce problème serait de soumettre un faisceau de fibres imprégné de résine obtenu avec une installation de fabrication en continu de fibres du type décrit plus haut au four afin d'obtenir une polymérisation au cœur du faisceau. Toutefois, un tel procédé serait consommateur de temps et d'énergie.

Les documents EP 1 506 085 A1 et US 2015/318080 A1 décrivent différents procédés de fabrication de matériaux composites sous forme de câbles.

Une autre solution à ce problème a été décrite dans le document EP 0 290 849. Selon ce document, on produit par pultrusion un faisceau de fibres imprégnés de résine en faisant passer le faisceau dans un bain de résine, puis en lui faisant traverser une filière et l'exposant à un rayonnement UV. La polymérisation du faisceau se fait progressivement, à partir de l'extérieur vers l'intérieur du faisceau pendant que celui-ci parcourt la longueur une filière transparente ou dans un milieu liquide délimité par deux buses étanches, tout en étant exposé au rayonnement UV. Permettant, certes, une meilleure polymérisation au cœur du faisceau, ce procédé s'avère toutefois assez lent et ne convient pas aux cadences de fabrication d'un processus industriel.

Un objectif de l'invention est de remédier aux inconvénients des documents précités et d'apporter une solution originale pour un procédé et un dispositif de polymérisation des fibres multifilamentaires pour une installation de fabrication en continu de matériaux composites longilignes permettant d'obtenir des composites ayant des sections transversales de grandes dimensions avec une productivité élevée.

Cet objectif est atteint par l'invention qui propose un procédé de fabrication en continu d'un élément composite longiligne comportant un faisceau de fibres multifilamentaires noyées dans une composition à base d'une matière polymérisable comportant les étapes suivantes :
- réaliser un arrangement de fibres multifilamentaires dudit faisceau sous forme de plusieurs brins individuels, comportant chacun plusieurs fibres multifilamentaires, de manière à ce qu'un premier brin soit situé au centre du faisceau et que les autres soient agencés autour du premier brin.
- entrainer ledit arrangement de fibres multifilamentaires pour le soumettre, dans la direction d'avancement, à :
- un dégazage dudit arrangement de fibres par l'action du vide,
- une imprégnation dudit arrangement de fibres par ladite composition pour obtenir des brins imprégnés,
- un passage du premier brin imprégné dans une première filière qui réalise une polymérisation partielle de la composition,
- un passage de tous les brins dans une filière finale qui les rassemble en un monobrin ;
- une exposition dudit monobrin à une source de rayonnement pour réaliser une polymérisation supplémentaire de façon à obtenir ledit élément composite longiligne.

Par élément composite longiligne comportant un faisceau de fibres multifilamentaires noyées dans une composition à base d'une matière polymérisable on comprend un élément composite de grande longueur que l'on fabrique de manière continue à partir d'une ou plusieurs bobines d'alimentation en fibres multifilamentaires pour former un faisceau qui est entraîné pour réaliser successivement l'imprégnation de matière organique polymérisable de ses fibres et la polymérisation de la matière au fur et à mesure du déplacement du faisceau.

Autrement dit, avec le procédé de l'invention on compose un faisceau à imprégner à partir de plusieurs brins de fibres multifilamentaires et on réalise une polymérisation sélective et successive des différents brins de manière à commencer la polymérisation des fibres multifilamentaires imprégnées au cœur du faisceau et de la finir à la périphérie de celui-ci. Ceci permet d'obtenir un l'élément composite longiligne à base de fibres multifilamentaires dont la forme et les dimensions sont bien maîtrisées et dont les propriétés mécaniques sont homogènes, et cela sur toute sa longueur. De préférence, la polymérisation supplémentaire conduit à une polymérisation définitive de la composition.

Ainsi, le procédé de l'invention permet de d'obtenir des éléments composites ayant une section transversale de grandes dimensions et cela à haute cadence de fabrication. A titre d'exemple, pour un composite CVR (pour composite verre résine), on peut obtenir avec le procédé de l'invention des sections ayant un diamètre compris entre 10 et 30 mm pour une cadence d'environ 50 m/min.

Le procédé de l'invention peut également être utilisé pour la réalisation d'éléments composites de sections ayant des diamètres compris entre 0.5 et 10 mm ayant comme but d'atteindre des précisions de formes plus élevées que les mêmes sections réalisées en une seule opération suivant le procédé décrit dans le document EP 1 174 250 déjà cité.

Ainsi, il a été constaté qu'en réalisant un noyau partiellement polymérisé au cœur du faisceau, les couches suivantes accrochent bien à ce noyau, ce qui permet d'obtenir un composite final dont la section est bien maîtrisée et la cadence de production élevée. En effet, il a été constaté lors des tests effectués en laboratoire que la résine ne s'écoulait plus à travers les fibres imprégnées du faisceau sous l'effet de la gravité, comme dans les installations de l'état de la technique, mais bien au contraire, les différentes couches successives de fibres accrochent bien au noyau pré-polymérisé jusqu'à ce qu'à la stabilisation définitive de leur forme après le passage dans la dernière filière et polymérisation finale du composite. A titre d'exemple, pour un composite CVR (pour composite verre résine), on peut obtenir avec le procédé de l'invention des sections un élément composite longiligne de grande longueur (ou en continu) ayant une section circulaire de diamètre compris entre 0,5 et 2,5 mm avec une tolérance de 0.05mm et une cadence comprise entre 100 et 200 m/min.

Par noyau partiellement polymérisé ou pré-polymérisé, on comprend un noyau composite de fibres multifilamentaires noyées dans une composition à base d'une matière polymérisable dont le degré de polymérisation a été arrêté lorsque ce degré de polymérisation a atteint au plus quelques pour cent de la polymérisation complète, typiquement entre 0.5 et 5%. Le degré de polymérisation peut être évalué à l'aide d'un instrument de mesure de type DSC (pour Differential Scanning Calorimetry en anglais).

La polymérisation complète du composite est obtenue lorsque le degré de polymérisation de la résine est proche de 100%, typiquement supérieur à 95% lorsque le composite est mesuré avec un appareil de type DSC.

L'arrangement des brins et les passages successifs dans au moins la première et la dernière filière sont réalisés de manière à ce que les brins soient amenés à converger, à partir d'une chambre d'imprégnation à la sortie de laquelle l'arrangement est le plus expansé, vers la filière finale où il est contracté pour former ledit monobrin. Ceci permet d'avoir un faisceau éclaté en plusieurs brins en début de procédé et de faire passer au moins le brin central dans une filière pouvant agir au cœur du faisceau. On réalise ainsi une polymérisation étagée du faisceau, avec un premier étage de polymérisation qui se fait au cœur du faisceau et un étage final qui a lieu lorsque tous les brins sont réunis en un monobrin final en vue de le soumettre à une polymérisation supplémentaire.

Ledit arrangement de fibres multifilamentaires peut comprendre un brin central, plusieurs brins intermédiaires agencés pour former au moins une couche intermédiaire entourant le brin central et au moins une couche externe de brins périphériques, dans lequel chaque couche intermédiaire de brins intermédiaires passe dans une filière intermédiaire qui réalise la polymérisation partielle de la composition.

Ceci permet d'avoir une polymérisation étagée à plusieurs étages et de réaliser ainsi des composites de plus grande section.

La section transversale dudit élément composite peut être circulaire. Cette section peut toutefois prendre toute autre forme : polygonale, ovale, écliptique, tubulaire, etc., notamment en choisissant de manière appropriée de la forme des filières.

Par fibre multifilamentaire on comprend une fibre qui comprend plusieurs filaments élémentaires agencés côté-à-côte pour former un faisceau dont les fibres élémentaires sont unidirectionnelles en étant sensiblement parallèles entre elles.

Les fibres multifilamentaire peuvent être choisies dans le groupe constitué par les fibres de verre, de carbone, de silice, de céramique et les mélanges de telles fibres, de préférence dans le groupe constitué par les fibres de verre, de carbone et les mélanges de telles fibres et encore plus préférentiellement lesdites fibres multifilamentaires peuvent être des fibres de verre. Ces fibres sont utilisées pour réaliser des composites longilignes réalisées par imprégnation d'une composition polymérisable des fibres multifilamentaires.

La matière polymérisable peut être du type thermodurcissable de préférence thermo-réticulable et encore plus préférentiellement du type vinylester. Par matière polymérisable on comprend une matière comportant, en poids, plus de 50%, de préférence plus de 75% et encore plus préférentiellement plus de 90% de matière organique. Ainsi, cette matière peut être une matière polymérique thermopolymérisable par exemple à base de polyester insaturé, de polyépoxide, de dérivé phénolique ou d'aminoplaste. De préférence, la matière polymérisable est réticulée. Il s'agit par exemple d'une résine réticulable par rayonnement ionisant, la polymérisation finale pouvant être déclenchée et contrôlée aisément au moyen d'un traitement ionisant, par exemple de type UV ou UV-visible. A titre de matière polymérisable réticulée on utilise préférentiellement une résine polyester (à base de polyester insaturé) ou plus préférentiellement encore une résine vinylester.

L'objectif de l'invention est également atteint avec un dispositif de fabrication en continu d'un élément composite longiligne comportant un faisceau de fibres multifilamentaires noyées dans une composition à base d'une matière organique polymérisable, comportant des moyens permettant de réaliser un arrangement de fibres multifilamentaires dudit faisceau sous forme de plusieurs brins individuels, chaque brin comportant plusieurs fibres, de manière à ce qu'un premier brin soit situé au centre du faisceau, des moyens de dégazage et des moyens d'imprégnation d'une composition à base d'une matière polymérisable dudit arrangement, une première filière apte à recevoir ledit premier brin en vue de sa polymérisation partielle et au moins une filière finale apte à recevoir tous les brins pour former un monobrin et des moyens de polymérisation à l'aide d'un dispositif à rayonnement dudit monobrin de façon à obtenir ledit élément composite longiligne.

Le dispositif selon l'invention peut comporter au moins une filière intermédiaire située entre ladite première filière et ladite dernière filière.

Lesdites première filière et filière intermédiaire peuvent comprendre des lampes annulaires à rayonnement UV comportant en leur partie centrale un tube de guidage d'un brin.

Ladite lampe annulaire peut comprendre un disque de support de plusieurs diodes électroluminescentes (LED) muni d'une ouverture centrale à travers laquelle passe ledit tube de guidage, ainsi qu'un réflecteur apte à envoyer le rayonnement émis par les diodes électroluminescentes (LED) en direction de la sortie dudit tube de guidage, des moyens de refroidissement de la lampe et des moyens d'alimentation électrique de celle-ci.

Lesdits moyens de refroidissement peuvent comprendre un circuit de refroidissement à l'eau et/ou un dispositif de production d'un flux d'air ou d'azote. Le circuit de refroidissement à l'eau assure un refroidissement rapide et efficace de la lampe. Le refroidissement utilisant un flux d'air ou d'azote sont plus faciles à mettre en œuvre, car ils ne nécessitent pas des éléments d'étanchéité comme c'est le cas pour un circuit de refroidissement à l'eau. De surcroît, la présence d'azote favorise la polymérisation en surface de la matière organique qui englobe les fibres, car la présence de l'oxygène de l'air agit comme un inhibiteur de réaction de polymérisation.

La section interne de chaque tube de guidage peut augmenter progressivement d'amont en aval entre la première filière et la dernière filière. Ceci permet une polymérisation progressive, à partir du cœur du faisceau, des différentes couches de fibres imprégnées entourant le brin central.

L'invention sera mieux comprise grâce à la suite de la description, qui s'appuie sur les figures suivantes :
la figure 1 est une vue en perspective illustrant les composants d'un dispositif de fabrication d'un élément composite longiligne selon un mode préféré de réalisation de l'invention ;
la figure 2 est une vue schématique en perspective illustrant les principaux composants d'un autre mode de réalisation du dispositif de l'invention la figure 3 est une vue en coupe à échelle agrandie du détail A de la figure 2 ;
la figure 4 illustre par une vue en perspective à plus grande échelle le dispositif de la figure 1 ;
la figure 5 illustre la partie droite du dispositif de la figure 4 à une échelle agrandie;
la figure 6 est une vue en coupe d'une filière faisant partie du dispositif de l'invention ;
la figure 7 illustre par une vue en perspective à échelle agrandie une pièce faisant partie du circuit de refroidissement d'une lampe faisant partie de la filière de la figure 6.

Sur les différentes figures, les éléments identiques ou similaires portent la même référence. Leur description n'est donc pas systématiquement reprise.

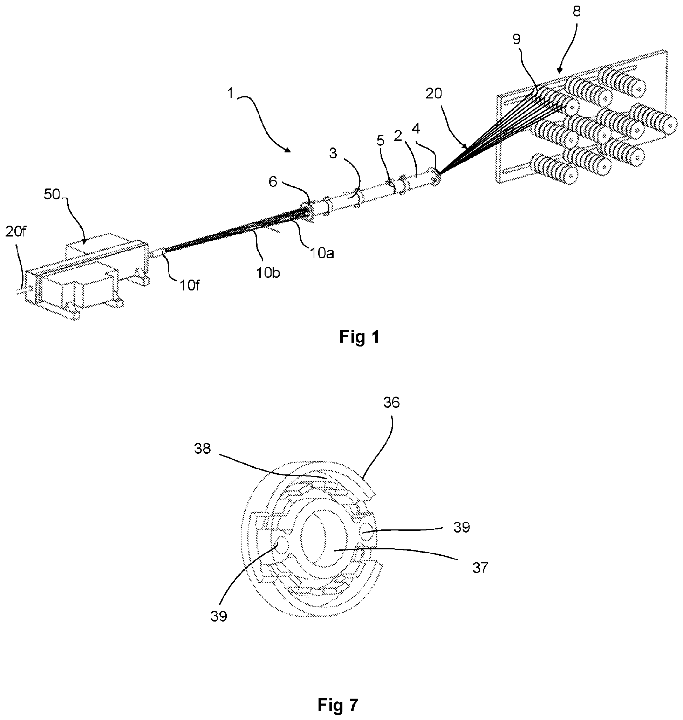

La figure 1 illustre de manière schématique un dispositif 1 de fabrication d'élément composite longiligne de grande longueur. Dans l'exemple illustré aux figures, ce composite est un monobrin en CVR comportant des filaments de verre noyés dans une résine thermodurcissable. Le monobrin peut prendre toute forme connue, il peut s'agir par exemple d'un monobrin cylindrique de diamètre important, par exemple allant jusqu'à 10 à 30 mm, ayant donc une section transversale de forme circulaire. Le dispositif de l'invention permet, bien entendu la fabrication de monobrins de section transversale rectangulaire, ovale, ou autre. Les filaments de verre sont présents sous la forme de fibres multifilamentaires essentiellement unidirectionnelles formées chacune d'une pluralité de filaments de verre unitaires ayant chacun un diamètre moyen de l'ordre de 5 à 30 µm. La résine est du type thermodurcissable ou réticulable, on entend que la résine est polymérisable ou durcissable (photodurcissable et/ou thermodurcissable) en étant à base d'un polymère thermodurcissable. La température de transition vitreuse de la résine Tg est de préférence supérieure à 160°C, plus préférentiellement supérieure à 170°C, en particulier supérieure à 180°C.

Sur la figure 1 on remarque un faisceau 20 de fibres multifilamentaires qui entre dans le dispositif 1, le faisceau étant représenté schématiquement sur les autres figures par une flèche E dont le sens indique la direction d'avancement du faisceau par rapport au dispositif 1 qui est, lui, fixe. Le faisceau 20 entre dans le dispositif par une plaque d'entrée 4 dans une chambre à vide 2, sous forme de plusieurs brins fibres multifilamentaires déroulés en continu à partir de différentes bobines 9 d'un dispositif d'alimentation 8. En général, les fibres sont livrées en rovings, c'est-à-dire en groupes de fibres enroulées en parallèle sur une bobine et identifiées par leur indicatif TEX. Le faisceau, en provenance du dispositif d'alimentation 8, traverse le dispositif 1 en avançant dans la direction de la flèche E, en étant mis en mouvement par un dispositif d'entraînement situé en sortie du dispositif 1 (on comprend après la sortie du dispositif à rayonnement 50, voire la direction de la flèche S, tel qu'il sera expliqué plus loin). Le dispositif d'entraînement (non représenté) est, par exemple, du type comportant un tambour de traction motorisé permettant d'enrouler l'élément composite autour de son axe ou comportant deux tambours motorisés se faisant face, en étant espacés d'une distance correspondant au moins égale à l'épaisseur de l'élément composite, et qui tournent en sens contraires pour entraîner l'élément composite, par friction, en un mouvement de translation, en le faisant passer dans l'espace situé entre les deux tambours. Le dispositif 1 comprend successivement : une chambre à vide 2, une chambre d'imprégnation 3 et deux filières 10a et 10b dites filières de polymérisation, une dernière filière 10f, dite filière de calibration à travers laquelle passe le monobrin 20f finalement obtenu et un dispositif à rayonnement 50 de celui-ci. Par dispositif à rayonnement 50, on comprend un dispositif à rayonnement UV et/ou IR qui réalise la polymérisation supplémentaire, de préférence finale, du monobrin sortant de la dernière filière 10f.

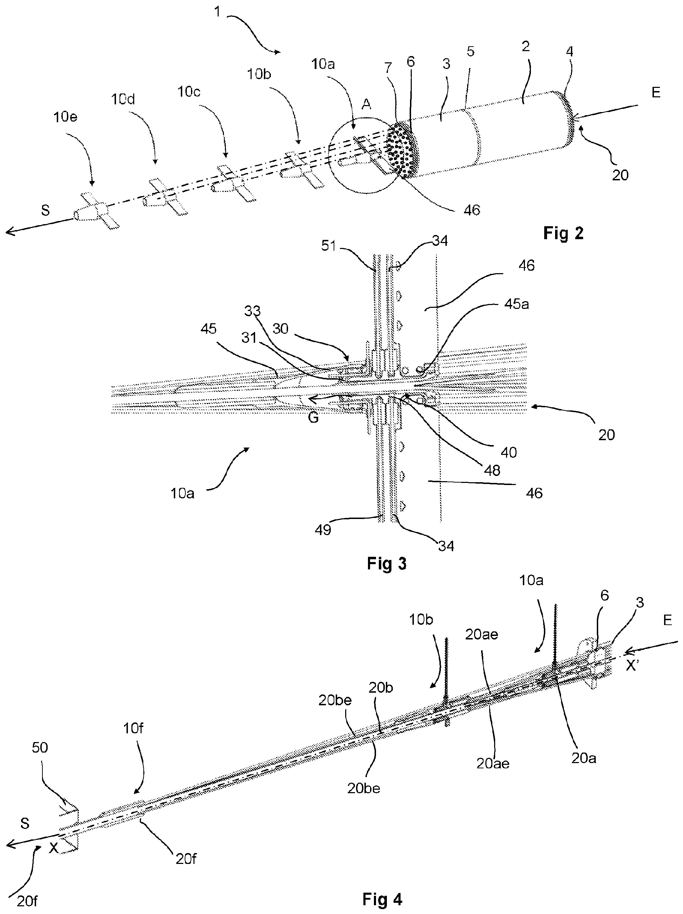

A la figure 2 on observe les principaux composants du dispositif 1 selon un autre mode de réalisation de l'invention qui comprend successivement : une chambre à vide 2, une chambre d'imprégnation 3 et plusieurs filières 10a à 10e dites filières de polymérisation. La dernière filière 10f, dite filière de calibration, ainsi que le dispositif à rayonnement 50 qui est disposé avant la sortie du dispositif sont visibles à la figure 4. La chambre à vide 2 est délimitée axialement par une plaque d'entrée 4, rigide, munie d'orifices traversants, et une plaque de séparation 5, rigide, munie également d'orifices traversants situés axialement au regard de ceux de la plaque 4. Les fibres réparties en plusieurs brins sont introduites dans la chambre à vide en les faisant passer par les différents orifices de la plaque 4 et en ressortent par les orifices traversant de la plaque 5 de manière à ce que les brins parcourent des trajets linéaires et parallèles entre eux d'une plaque à l'autre en étant parallèles à l'axe longitudinal X-X' du dispositif. La chambre à vide est reliée à une pompe à vide (non représentée) qui maintient un niveau de pression d'environ 0,1 bar dans la chambre à vide 2, malgré le passage des fibres à travers des ouvertures ayant des diamètres supérieurs à ceux des brins qui les traversent. La chambre d'imprégnation 3 est une enceinte étanche, délimitée par la plaque intermédiaire 5 et par une plaque de sortie 6, rigide, munie également d'orifices traversants 7 situés axialement au regard de ceux de la plaque intermédiaire 5. Le nombre d'orifices 7 correspond au nombre de brins qui composent le faisceau 20. La chambre d'imprégnation est alimentée en résine en provenance d'un réservoir extérieur (non représenté) via une tubulure d'entrée sur le haut non représentée, la chambre comprenant également sur le bas une tubulure d'évacuation non représentée de la résine. La chambre d'imprégnation 3 est totalement remplie de résine de manière à ce que les fibres sortant de la chambre à vide 2 la traversent en parcourant des trajets linéaires et parallèles entre eux et soient complètement imprégnées de résine.

Il est bien entendu nécessaire, avant la mise en fonctionnement du dispositif 1 de l'invention, de faire passer tous les brins du faisceau à imprégner, à partir de bobines de stockage 9, en passant à travers les orifices des plaques 4, 5 et 6, à travers toutes les filières et le dispositif à rayonnement 50 et jusqu'au moyen d'entraînement qui assure la mise en tension de tous les brins du faisceau selon un arrangement de fibres multifilamentaires préétabli.

A titre d'exemple, si l'on veut obtenir un élément composite cylindrique ayant un diamètre extérieur de 19 mm, en utilisant un dispositif présenté sur les figures 1, 4 et 5, on utilise un arrangement d'environ 80 faisceaux élémentaires de fibres multifilamentaires, chacun de ces 80 faisceaux élémentaires arrivant dans le dispositif en provenance d'une bobine 9 de roving 4800 TEX. L'arrangement des 80 faisceaux élémentaires est réalisé comme suit : un brin central d'un diamètre de 5,6 mm, lui-même constitué d'un assemblage de 8 faisceaux élémentaires de fibres multifilamentaires en provenance de 8 bobines de 4800 TEX, et 2 rangées supplémentaires concentriques à la première dont l'épaisseur radiale de chaque rangée est d'environ 3 mm, chaque rangée comportant plusieurs brins concentriques, la première rangée supplémentaire constituée de 3 brins eux-mêmes constitués par 8 faisceaux élémentaires en provenances de 8 bobines de 4800 TEX, la deuxième rangée supplémentaire constituée de 6 brins eux-mêmes constitués par 8 faisceaux élémentaires en provenances de 8 bobines de 4800 TEX, le tout donnant bien un total de 8 + 3 x 8 + 6 x 8 = 80 bobines de 4800 TEX.

En aval de la chambre d'imprégnation 3 se trouvent les filières 10a à 10e de polymérisation et une dernière filière 10f de calibrage, toutes les filières étant agencées selon un même axe qui est l'axe longitudinal X-X' du dispositif. Le faisceau 20 est composé d'une pluralité de brins, en provenance des bobines 9, formant un arrangement de brins destiné à assurer un passage successif de ces brins à travers les différentes filières du dispositif. L'arrangement des brins est organisé de manière à ce que le brin central passe à travers la première filière 10a, agencée sensiblement dans l'axe du dispositif, les différents brins intermédiaires étant organisés par rangées successives entourant le brin central, de manière coaxiale à l'axe du brin central, pour converger progressivement lorsqu'ils traversent les filières 10b à 10e jusqu'à ce que tous les brins soient réunis pour passer dans la dernière filière 10f (fig. 4) et former un monobrin 20f.

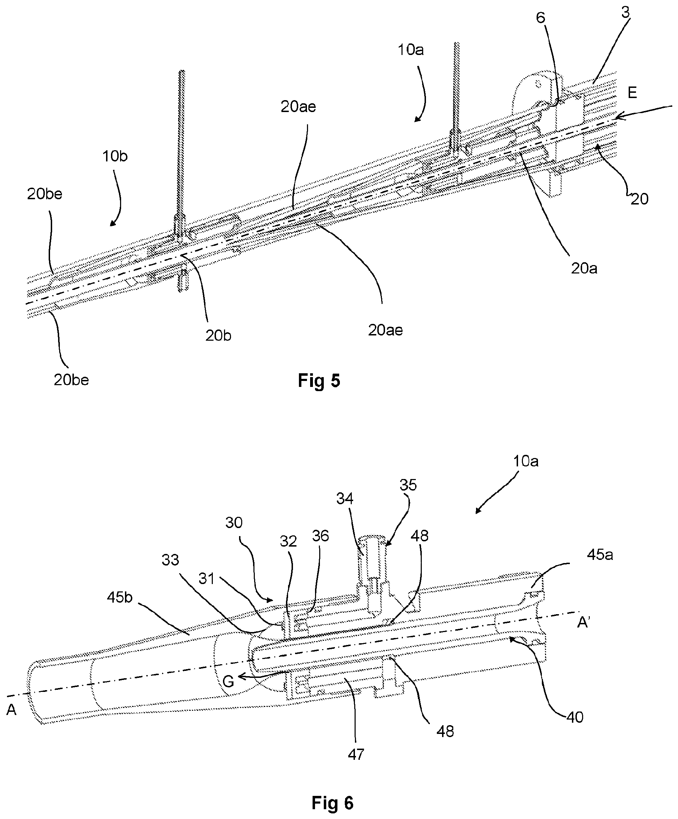

La figure 4 illustre un mode préféré de réalisation du dispositif comprenant une première filière 10a, une filière intermédiaire 10b et une dernière filière de calibrage 10f. On observe mieux en référence à la figure 5, que le faisceau de fibres multifilamentaires 20 comporte un brin central 20a et des brins périphériques agencés de manière concentrique au premier. Le brin central 20a est destiné à passer dans la première filière 10a qui assure sa polymérisation partielle. Le brin sortant de celle-ci et les brins périphériques 20ae passent ensemble dans une filière intermédiaire 10b qui assure la polymérisation partielle du nouveau brin 20b ainsi formé. Le brin 20b sortant de la filière intermédiaire 10b et les brins périphériques restants 20be passent ensemble dans une filière de calibrage 10f qui les met en forme pour former un brin final 20f avant la polymérisation définitive de celui-ci qui a lieu dans le dispositif à rayonnement 50. La filière de calibrage 10f est un tube ayant une forme et des dimensions bien définies. Dans une variante, la filière de calibrage est du type filière de polymérisation.

Nous allons décrire, en référence aux figures 3 et 6 la structure d'une filière de polymérisation 10a. La filière a une forme allongée d'axe longitudinal A-A', elle comprend une lampe annulaire 30 et un tube de guidage 40 d'un brin de fibres qui entre dans la filière. La lampe et le tube de guidage sont maintenues ensemble dans un corps de filière 45 en deux parties 45a, 45b muni d'ailettes de fixation 46 au dispositif 1. Le corps de filière se prolonge à son extrémité de sortie par un tube 41 qui oriente le faisceau sortant de la filière vers la filière suivante. La lampe annulaire 30 est un ensemble comprenant plusieurs LED 31 à rayonnement UV reliées entre elles via un circuit imprimé sur un support 32 commun de forme annulaire centré sur l'axe A-A'. La lampe annulaire 30 comprend un réflecteur 33 apte à envoyer le rayonnement émis par les LED en direction de la sortie du tube de guidage 40. A titre d'exemple, la lampe annulaire 30 comprend plusieurs LEDs haute puissance émettant dans la longueur d'onde comprise entre 365 et 410nm, préférentiellement 385 nm, ayant une puissance électrique max consommée comprise entre 100 et 500W et nécessite un refroidissement lors de son fonctionnement. La filière présentée à la figure 3 comporte un circuit de refroidissement à liquide (par exemple eau), alors que la filière de la figure 6 comporte un circuit de refroidissement à air ou azote. La filière présentée à la figure 6 comprend un circuit de refroidissement 35 à cet effet comportant une entrée 34 qui le relie à une alimentation en air ou azote et une plaque de distribution 36 (fig. 7) venant en contact thermique avec le support 32. La plaque de distribution 36 comprend une chambre de distribution 38 comportant des parois internes forant chicanes pour le gaz de refroidissement dont le trajet au sein de la chambre et de la filière est représenté à l'aide d'un trait pourvu de flèches sur les figures 6 et 7. La plaque 36 comprend par ailleurs un orifice central 37 à travers lequel passe le tube de guidage 40 et des orifices 39 de réception des connexions électriques de la lampe 30. Le gaz qui a servi au refroidissement de la plaque de distribution 36 ressort ensuite de cette plaque par le conduit 47, pour ensuite se répartir dans la chambre annulaire 48, puis continue dans l'espace prévu à cet effet entre les pièces 40 et 45a, pour finalement sortir de manière concentrique dans l'espace ménagé dans la pièce 45b suivant la direction indiquée par la flèche G. Ce flux de gaz a donc comme double but de, premièrement, refroidir la plaque de distribution 36, puis deuxièmement de purger en permanence le volume intérieur de la pièce 45b d'éventuels solvants de résine en suspension ou micro-projections de résine, et plus spécifiquement de garantir la propreté du réflecteur 33. La filière de polymérisation 10a est agencée au sein du dispositif 1 de manière à ce que son axe longitudinal A-A' soit coaxial à l'axe X-X' du dispositif.

La filière présentée à la figure 3 quant à elle dispose de deux entrées 34 de gaz, air ou azote, menant à un conduit annulaire 48, puis vers l'espace intérieur du corps 45 suivant la direction de la flèche G, visant les mêmes raisons de garantie de propreté du réflecteur 33. La filière représentée à la figure 3 comporte en plus de la filière représentée à la figure 6 une alimentation 49 en liquide de refroidissement, menant à une plaque de distribution (non représentée), puis à un conduit 51 retournant vers le système de circulation et maintien en température du circuit de refroidissement.

La première étape du procédé de l'invention consiste à réaliser un arrangement de fibres multifilamentaires en plusieurs brins individuels qui forment le faisceau 20, au moment de son arrivée dans le dispositif 1, chaque brin comportant une ou plusieurs fibres multifilamentaires. L'arrangement est réalisé de manière à ce qu'un premier brin soit agencé au centre du dispositif, selon l'axe X-X' de celui-ci, et plusieurs brins périphériques soient agencés autour du premier brin. On utilise pour cela une plaque d'entrée 4 dans une chambre à vide 2 comportant plusieurs orifices de passages des brins, dont un orifice central et plusieurs orifices périphériques. On fait ensuite passer cet arrangement à travers la plaque de séparation 5 avec une chambre d'imprégnation 3 et la plaque de sortie 6 de celle-ci. Les brins sortants de la chambre d'imprégnation sont ensuite passés dans les différentes filières 10a, 10b, (voire 10c, 10d, 10^{e} pour le dispositif de la fig. 2) qui assurent chacune une polymérisation partielle du brin qui la traverse. Le dernier brin central sortant de la dernière filière 10e passe dans une filière finale 10f. La filière finale 10f ne réalise que le rassemblement de tous les brins en son centre afin de pouvoir faire passer le monobrin 20f ainsi obtenu dans un dispositif à rayonnement 50 qui assure la polymérisation finale du monobrin. Dans une variante, la filière finale 10f est du même type que les filières intermédiaires et réalise la polymérisation finale du monobrin 20f qui la traverse.

D'autres variantes et modes de réalisation de l'invention peuvent être envisagés dans le cadre de l'invention telle que revendiquée. On peut utiliser le procédé de l'invention avec d'autres types de fibres multifilamentaires, voire avec différents types de fibres au sein d'un même faisceau.

Par ailleurs, on peut envisager l'utilisation du procédé et dispositif de raboutage de l'invention avec une matière organique thermiquement polymérisable.

On pourrait également avoir un faisceau délivré par une bobine unique en entrée du dispositif et que l'on sépare en plusieurs brins individuels.

## Revendications

1. Procédé de fabrication en continu d'un élément composite longiligne comportant un faisceau (20) de fibres multifilamentaires noyées dans une composition à base d'une matière polymérisable comportant les étapes suivantes :
- réaliser un arrangement de fibres multifilamentaires dudit faisceau sous forme de plusieurs brins individuels comportant chacun plusieurs fibres multifilamentaires, de manière à ce qu'un premier brin (20a) soit situé au centre du faisceau et que les autres brins soient agencés autour du premier brin ;
- entrainer ledit arrangement de fibres multifilamentaires pour le soumettre, dans la direction d'avancement, à :
- un dégazage dudit arrangement de fibres par l'action du vide,
- une imprégnation dudit arrangement de fibres par ladite composition pour obtenir des brins imprégnés,
- un passage du premier brin imprégné dans une première filière (10a) qui réalise une polymérisation partielle de la composition,
- un passage de tous les brins dans une dernière filière (10f) qui les rassemble en un monobrin (20f),
- une exposition dudit monobrin (20f) à une source de rayonnement pour réaliser une polymérisation supplémentaire de façon à obtenir ledit élément composite longiligne.

2. Procédé selon revendication 1, **caractérisé en ce que** ledit arrangement de brins et les passages successifs dans au moins la première et la dernière filière sont réalisés de manière à ce que les brins soient amenés à converger, à partir d'une chambre d'imprégnation (3) à la sortie de laquelle l'arrangement est le plus expansé, vers la dernière filière (10f) où il est contracté pour former ledit monobrin (20f).

3. Procédé selon l'une des revendications précédentes, **caractérisé en ce que** ledit arrangement de fibres multifilamentaires comprend un brin central, plusieurs brins intermédiaires agencés pour former au moins une couche intermédiaire entourant le brin central et au moins une couche externe de brins périphériques, dans lequel chaque couche intermédiaire de brins intermédiaires passe dans une filière intermédiaire qui réalise la polymérisation partielle de la composition.

4. Procédé selon l'une des revendications précédentes, **caractérisé en ce que** la section dudit élément composite est circulaire.

5. Procédé selon l'une des revendications précédentes, **caractérisé en ce que** lesdites fibres multifilamentaires sont choisies dans le groupe constitué par les fibres de verre, de carbone, de silice, de céramique et les mélanges de telles fibres, de préférence dans le groupe constitué par les fibres de verre, de carbone et les mélanges de telles fibres et encore plus préférentiellement lesdites fibres multifilamentaires sont des fibres de verre.

6. Procédé selon l'une des revendications précédentes, **caractérisé en ce que** ladite matière polymérisable est du type thermodurcissable de préférence thermo-réticulable et encore plus préférentiellement du type vinylester.

7. Dispositif (1) de fabrication en continu d'un élément composite longiligne comportant un faisceau (20) de fibres multifilamentaires noyées dans une composition à base d'une matière polymérisable, comportant des moyens permettant de réaliser un arrangement de fibres multifilamentaires dudit faisceau sous forme de plusieurs brins individuels, chaque brin comportant plusieurs fibres, de manière à ce qu'un premier brin (20a) soit situé au centre du faisceau, des moyens de dégazage et des moyens d'imprégnation d'une composition à base d'une matière polymérisable dudit arrangement, une première filière (10a) apte à recevoir ledit premier brin (20a) en vue de sa polymérisation partielle et au moins une dernière filière (10f) apte à recevoir tous les brins pour former un monobrin (20f) et des moyens de polymérisation à l'aide d'un dispositif à rayonnement (50) dudit monobrin de façon à obtenir ledit élément composite longiligne.

8. Dispositif selon la revendication 7, **caractérisé en ce que** qu'il comporte au moins une filière intermédiaire (10b-10e) située entre ladite première filière (10a) et ladite dernière filière (10f).

9. Dispositif selon la revendication 8, caractérisé en ce lesdites première filière (10a) et filière intermédiaire (10b-10e) comprennent des lampes annulaires (30) à rayonnement UV comportant en leur partie centrale un tube de guidage (40) d'un brin.

10. Dispositif selon la revendication 9, **caractérisé en ce que** ladite lampe annulaire (30) comprend un disque de support (32) de plusieurs diodes électroluminescentes muni d'une ouverture centrale à travers laquelle passe ledit tube de guidage (40), ainsi qu'un réflecteur (33) apte à envoyer le rayonnement émis par les diodes électroluminescentes en direction de la sortie dudit tube de guidage, des moyens de refroidissement de la lampe et des moyens d'alimentation électrique de celle-ci.

11. Dispositif selon la revendication 10, **caractérisé en ce que** lesdits moyens de refroidissement comprennent un circuit de refroidissement à l'eau et/ou un dispositif de production d'un flux d'air ou d'azote.

12. Dispositif selon l'une des revendications 9 à 11, **caractérisé en ce que** la section interne de chaque tube de guidage (40) augmente progressivement d'amont en aval entre la première filière (10a) et la dernière filière (10f).

## Patentansprüche

1. Verfahren zur kontinuierlichen Herstellung eines länglichen Verbundelements, das ein Bündel (20) aus Multifilamentfasern umfasst, die in eine Zusammensetzung auf Basis eines polymerisierbaren Materials eingebettet sind, umfassend die folgenden Schritte:
- Ausführen einer Anordnung von Multifilamentfasern des Bündels in Form von mehreren einzelnen Strängen, die jeweils mehrere Multifilamentfasern umfassen, so dass ein erster Strang (20a) im Zentrum des Bündels gelegen ist und die anderen Stränge um den ersten Strang herum angeordnet sind;
- Antreiben der Anordnung von Multifilamentfasern, um sie in der Vorschubrichtung Folgendem zu unterziehen:
- einem Entgasen der Anordnung von Fasern durch die Einwirkung des Vakuums,
- einem Imprägnieren der Anordnung von Fasern mit der Zusammensetzung, um imprägnierte Stränge zu erhalten,
- einem Durchgang des ersten imprägnierten Strangs durch eine erste Düse (10a), die eine partielle Polymerisation der Zusammensetzung ausführt,
- einem Durchgang aller Stränge durch eine letzte Düse (10f), die sie zu einem Einzelstrang (20f) zusammenführt,
- einer Exposition des Einzelstrangs (20f) gegenüber einer Strahlungsquelle, um eine zusätzliche Polymerisation auszuführen, so dass das längliche Verbundelement erhalten wird.

2. Verfahren nach Anspruch 1, **dadurch gekennzeichnet, dass** das Anordnen von Strängen und die sukzessiven Durchgänge durch mindestens die erste und die letzte Düse so ausgeführt werden, dass die Stränge dazu gebracht werden, von einer Imprägnierkammer (3) aus, an deren Ausgang die Anordnung am weitesten ausgedehnt ist, zu der letzten Düse (10f) hin, wo sie kontrahiert wird, um den Einzelstrang (20f) zu bilden, zu konvergieren.

3. Verfahren nach einem der vorhergehenden Ansprüche, **dadurch gekennzeichnet, dass** die Anordnung von Multifilamentfasern einen zentralen Strang, mehrere Zwischenstränge, die so angeordnet sind, dass sie mindestens eine den zentralen Strang umgebende Zwischenlage bilden, und mindestens eine äußere Lage von peripheren Strängen aufweist, wobei jede Zwischenlage von Zwischensträngen durch eine Zwischendüse durchgeht, welche die partielle Polymerisation der Zusammensetzung ausführt.

4. Verfahren nach einem der vorhergehenden Ansprüche, **dadurch gekennzeichnet, dass** der Querschnitt des Verbundelements kreisförmig ist.

5. Verfahren nach einem der vorhergehenden Ansprüche, **dadurch gekennzeichnet, dass** die Multifilamentfasern ausgewählt sind aus der Gruppe bestehend aus Glas-, Carbon-, Siliciumoxid-, Keramikfasern und Mischungen solcher Fasern, bevorzugt aus der Gruppe bestehend aus Glas-, Carbonfasern und Mischungen solcher Fasern, und die Multifilamentfasern noch stärker bevorzugt Glasfasern sind.

6. Verfahren nach einem der vorhergehenden Ansprüche, **dadurch gekennzeichnet, dass** das polymerisierbare Material vom wärmehärtbaren Typ ist, bevorzugt wärmevernetzbar ist und noch stärker bevorzugt vom Vinylestertyp ist.

7. Vorrichtung (1) zur kontinuierlichen Herstellung eines länglichen Verbundelements, das ein Bündel (20) von Multifilamentfasern umfasst, die in eine Zusammensetzung auf Basis eines polymerisierbaren Materials eingebettet sind, umfassend Mittel, die es ermöglichen, eine Anordnung von Multifilamentfasern des Bündels in Form von mehreren einzelnen Strängen auszuführen, wobei jeder Strang mehrere Fasern umfasst, so dass ein erster Strang (20a) im Zentrum des Bündels gelegen ist, Entgasungsmittel und Mittel zum Imprägnieren der Anordnung mit einer Zusammensetzung auf Basis eines polymerisierbaren Materials, eine erste Düse (10a), die in der Lage ist, den ersten Strang (20a) im Hinblick auf seine partielle Polymerisation aufzunehmen, und mindestens eine letzte Düse (10f), die in der Lage ist, alle Stränge aufzunehmen, um einen Einzelstrang (20f) zu bilden, und Mittel zur Polymerisation mithilfe einer Vorrichtung (50) zur Bestrahlung des Einzelstrangs, so dass das längliche Verbundelement erhalten wird.

8. Vorrichtung nach Anspruch 7, **dadurch gekennzeichnet, dass** sie mindestens eine Zwischendüse (10b-10e) umfasst, die zwischen der ersten Düse (10a) und der letzten Düse (10f) gelegen ist.

9. Vorrichtung nach Anspruch 8, **dadurch gekennzeichnet, dass** die erste Düse (10a) und die Zwischendüse (10b-10e) ringförmige Lampen (30) mit UV-Strahlung aufweisen, die in ihrem zentralen Teil ein Führungsrohr (40) für einen Strang umfassen.

10. Vorrichtung nach Anspruch 9, **dadurch gekennzeichnet, dass** die ringförmige Lampe (30) eine Trägerscheibe (32) für mehrere Leuchtdioden, die mit einer zentralen Öffnung versehen ist, durch die das Führungsrohr (40) durchgeht, sowie einen Reflektor (33), der in der Lage ist, die von den Leuchtdioden emittierte Strahlung in Richtung des Ausgangs des Führungsrohres zu leiten, Kühlmittel zum Kühlen der Lampe und Mittel zu ihrer Stromversorgung aufweist.

11. Vorrichtung nach Anspruch 10, **dadurch gekennzeichnet, dass** die Kühlmittel einen Wasserkühlkreislauf und/oder eine Vorrichtung zur Erzeugung eines Luft- oder Stickstoffstroms umfassen.

12. Vorrichtung nach einem der Ansprüche 9 bis 11, **dadurch gekennzeichnet, dass** der innere Querschnitt jedes Führungsrohres (40) zwischen der ersten Düse (10a) und der letzten Düse (10f) von stromaufwärts nach stromabwärts progressiv zunimmt.

## Claims

1. Process for the continuous manufacture of an elongate composite element comprising a bundle (20) of multifilament fibres embedded in a composition based on a polymerizable substance comprising the following steps:
- arranging multifilament fibres of said bundle in the form of several individual strands, each comprising several multifilament fibres, so that a first strand (20a) is located at the centre of the bundle and that the other strands are positioned around the first strand,
- carrying along said arrangement of multifilament fibres in order to subject it, in the direction of forward progression, to:
- degassing of said arrangement of fibres by the action of vacuum,
- impregnation of said arrangement of fibres with said composition in order to obtain impregnated strands,
- passage of the first impregnated strand through a first die (10a) which carries out a partial polymerization of the composition,
- passage of all the strands through a last die (10f) which brings them together in a single strand (20f),
- exposure of said single strand (20f) to a source of radiation in order to carry out an additional polymerization so as to obtain said elongate composite element.

2. Process according to Claim 1, **characterized in that** said arrangement of the strands and the successive passages through at least the first and the last die are carried out so that the strands are brought to converge, starting from an impregnation chamber (3) at the outlet of which the arrangement is the most expanded, towards the last die (10f) where it is contracted to form said single strand (20f).

3. Process according to either of the preceding claims, **characterized in that** said arrangement of multifilament fibres comprises a central strand, several intermediate strands positioned to form at least one intermediate layer surrounding the central strand and at least one outer layer of peripheral strands, in which each intermediate layer of intermediate strands passes through an intermediate die which carries out the partial polymerization of the composition.

4. Process according to one of the preceding claims, **characterized in that** the section of said composite element is circular.

5. Process according to one of the preceding claims, **characterized in that** said multifilament fibres are selected from the group consisting of glass fibres, carbon fibres, silica fibres, ceramic fibres and the mixtures of such fibres, preferably from the group consisting of glass fibres, carbon fibres and the mixtures of such fibres, and more preferentially still said multifilament fibres are glass fibres.

6. Process according to one of the preceding claims, **characterized in that** said polymerizable substance is of the thermosetting type, preferably thermocrosslinkable type, and more preferentially still of the vinyl ester type.

7. Device (1) for the continuous manufacture of an elongate composite element comprising a bundle (20) of multifilament fibres embedded in a composition based on a polymerizable substance, comprising means making it possible to produce an arrangement of multifilament fibres of said bundle in the form of several individual strands, each strand comprising several fibres, so that a first strand (20a) is located at the centre of the bundle, means for degassing said arrangement and means for impregnation of said arrangement with a composition based on a polymerizable material, a first die (10a) capable of receiving said first strand (20a) with a view to its partial polymerization and at least one last die (10f) capable of receiving all the strands in order to form a single strand (20f) and means for polymerization of said single strand using a radiation device (50) so as to obtain said elongate composite element.

8. Device according to Claim 7, **characterized in that** it comprises at least one intermediate die (10b-10e) located between said first die (10a) and said last die (10f).

9. Device according to Claim 8, **characterized in that** said first die (10a) and said intermediate die (10b-10e) comprise annular UV radiation lamps (30) comprising, in their central part, a guide tube (40) for a strand.

10. Device according to Claim 9, **characterized in that** said annular lamp (30) comprises a disc (32) for supporting several light-emitting diodes provided with a central opening through which said guide tube (40) passes, and also a reflector (33) capable of sending the radiation emitted by the light-emitting diodes in the direction of the outlet of said guide tube, means for cooling the lamp and means for supplying the latter with electricity.

11. Device according to Claim 10, **characterized in that** said cooling means comprise a water cooling circuit and/or a device for producing an air or nitrogen flow.

12. Device according to one of Claims 9 to 11, **characterized in that** the internal section of each guide tube (40) gradually increases from upstream to downstream between the first die (10a) and the last die (10f).
